# FASCICULE DE BREVET EUROPEEN

(11) **EP 2 349 747 B1**
(45) Date de publication et mention de la délivrance du brevet: **26.09.2012**
(21) Numéro de dépôt: 09760544.8
(22) Date de dépôt: 27.10.2009
(51) Int. Cl.: B60C 11/24

(54) **PNEUMATIQUE MUNI DE TEMOINS D'USURE SONORES**
REIFEN MIT AKUSTISCHEN VERSCHLEISSANZEIGEN
TYRE WITH SOUND WEAR INDICATORS

(30) Priorité: 06.11.2008 FR 0857558
(43) Date de publication de la demande: 03.08.2011
(73) Titulaire: MICHELIN Recherche et Technique S.A., 1763 Granges-Paccot (CH); COMPAGNIE GENERALE DES ETABLISSEMENTS MICHELIN, 63000 Clermont-Ferrand (FR)
(72) Inventeur: PATURLE, Antoine, F-63430 Pont-du-Chateau (FR)
(74) Mandataire: Dequire, Philippe Jean-Marie Denis
(86) Numéro de dépôt international: PCT/FR2009/052071
(87) Numéro de publication internationale: WO 2010/052409

(56) Documents cités:
- EP-A- 0 936 088
- JP-A- 8 207 515
- US-A- 3 727 661

## Description

L'invention concerne le domaine des pneumatiques de véhicules automobiles et la détection de leur niveau d'usure.

A mesure qu'un pneumatique roule sur un sol, sa bande de roulement qui est en contact avec le sol s'use par frottement.

Pour des raisons évidentes de sécurité, il est important de remplacer un pneumatique avant que l'usure de sa bande de roulement ne soit trop importante et risque de causer des problèmes d'adhérence sur sol mouillé.

Pour faciliter le contrôle de l'usure et détecter une usure trop prononcée, les pneumatiques sont couramment munis de témoins d'usure.

Un exemple de témoin d'usure couramment utilisé consiste en une nervure ménagée au fond d'un sillon de la sculpture du pneumatique et dont la hauteur correspond à la profondeur minimale des sillons du pneumatique nécessaire à un fonctionnement correct et sûr du pneumatique. Ainsi, lorsque la bande de roulement du pneumatique est usée et que le sommet de la nervure affleure la surface externe de la bande de roulement, cela signifie que la profondeur minimale tolérée pour les sillons est atteinte, voire dépassée. Il est donc urgent de remplacer le pneumatique pour des raisons de sécurité.

Un inconvénient de ce type de témoin d'usure est qu'il nécessite la vigilance du conducteur du véhicule automobile et un contrôle visuel régulier de l'état de ses pneumatiques. Or, de nombreux conducteurs omettent de réaliser de tels contrôles et changent leurs pneumatiques trop tardivement, par exemple lorsqu'au cours d'un contrôle technique du véhicule, un garagiste vérifie l'état d'usure des pneumatiques.

D'autres témoins d'usure sont décrits dans les documents EP 0 936 088, US 3 727 661 et JP 08 207515, selon le préambule de la revendication 1.

L'invention a notamment pour but de fournir un pneumatique muni d'un nouveau type de témoin d'usure plus efficace et plus sûr.

A cet effet, l'invention a pour objet un pneumatique de véhicule, comprenant une bande de roulement conformée de sorte que, au-delà d'un seuil d'usure radiale prédéterminé, elle comprend au moins une paire de première et deuxième cavités dites « sonores », chaque première et deuxième cavité sonore étant respectivement agencée dans un premier et deuxième sillon circonférentiel de la bande de roulement, chaque cavité sonore de la paire étant reliée à l'autre cavité sonore de la paire par un canal dit « sonore » ménagé dans la bande de roulement, chaque cavité de la paire et le canal associé :
- débouchant radialement vers l'extérieur du pneumatique,
- étant conformés de manière à être fermés par le sol de manière sensiblement étanche lors de leur passage dans l'aire de contact du pneumatique avec le sol.

Grâce à l'invention, lorsque le pneumatique est usé au-delà d'un seuil d'usure que l'on considère comme dangereux, une ou plusieurs paires de cavités sonores et un ou plusieurs canaux sonores associés apparaissent sur la bande de roulement.

Ces cavités et le canal associé présentent une forme particulière qui leur confère des propriétés sonores, c'est-à-dire que ces cavités et le canal associé provoquent un bruit caractéristique lors du roulage du pneumatique usé.

En effet, du fait que la paire de cavités et le canal les reliant l'une à l'autre sont conformés de manière à être fermés par le sol de manière sensiblement étanche, l'air est emprisonné temporairement lors du passage de la paire de cavités et du canal dans l'aire de contact du pneumatique avec le sol. Or, sous l'effet de la déformation du pneumatique dans l'aire de contact, cet air emprisonné dans la paire de cavités et le canal associé se comprime puis se détend brutalement à la sortie de l'aire de contact lorsque la bande de roulement quitte le contact avec le sol à l'arrière du pneumatique et que par conséquent la paire de cavités et le canal associé s'ouvrent.

Cette détente de l'air dure de l'ordre de quelques millisecondes et provoque un bruit spécifique, parfois appelé chuintement ou bruit de pompage, fonction notamment de la forme et du volume de la paire de cavités et du canal associé.

Ce bruit caractéristique, qui n'apparaît que lorsque le pneumatique est usé au-delà d'un certain seuil, forme ainsi un témoin d'usure sonore. Ainsi, même si le conducteur n'inspecte pas visuellement et régulièrement l'état de surface de ses pneumatiques, il sera informé de l'usure excessive de ses pneumatiques lorsque, en roulant, il entendra ce chuintement caractéristique.

En étant disposés dans les sillons, le bruit émis par les cavités et le canal associé est amplifié par rapport à des témoins d'usure sonores qui seraient disposés ailleurs dans la bande de roulement. Le bruit émis est également amplifié par un pavillon formé par le pneumatique et le sol une fois les cavités et le canal associé ayant passé l'aire de contact. Cette amplification par effet pavillon est maximale lorsque les cavités sonores sont préférentiellement disposées axialement dans une partie centrale de l'aire de contact du pneumatique.

On entend par partie centrale de l'aire de contact la zone de l'aire de contact s'étendant axialement sur sensiblement la moitié de la largeur de cette aire de contact dans les conditions nominales de charge et de pression et centrée relativement au plan médian central du pneumatique.

En outre, les cavités sonores peuvent dégrader les performances du pneumatique par rapport à un pneumatique dépourvu de telles cavités sonores, notamment en termes d'évacuation de l'eau par les sillons. Le canal reliant les cavités de chaque paire permet de compenser cette perte de performance tout en permettant la détection de l'usure du pneumatique.

De préférence, on détermine la forme et le volume des cavités sonores et du canal associé de sorte que la fréquence et l'intensité du bruit produit par le passage de la paire de cavités et du canal associé dans l'aire de contact rende ce bruit audible par le conducteur depuis l'habitacle du véhicule.

Pour détecter ce chuintement, on peut également utiliser un ou plusieurs microphones de détection des bruits de roulage, reliés à un calculateur apte à détecter le chuintement parmi le bruit de roulage et à informer le conducteur de l'usure de ses pneumatiques.

Étant donné que ce phénomène de chuintement n'apparaît que lorsque de l'air est comprimé dans la paire de cavités et le canal associé puis dilaté en s'en échappant, il est important que la paire de cavités et le canal associé soit fermés de manière sensiblement étanche par le sol lors de leur passage dans l'aire de contact. En effet, des cavités ou un canal dont le sommet serait recouvert par le sol mais qui, par ailleurs, comprendrait des canaux transversaux en communication fluidique avec l'air extérieur, ne formerait pas de cavités sonores ou un canal sonore car l'air qu'elles ou il contient ne pourrait pas être comprimé. Cela est notamment le cas en ce qui concerne les sculptures des bandes de roulement des pneumatiques de l'état de la technique qui sont généralement formées par un réseau de canaux faisant communiquer les différentes cavités les unes avec les autres et avec l'air extérieur.

De même, des cavités ou un canal dont les dimensions seraient trop grandes pour pouvoir être totalement recouvert par le sol lors de son passage dans l'aire de contact, par exemple des cavités ou un canal dont la longueur serait supérieure à la longueur de l'aire de contact, ne pourrait pas former des cavités sonores ou un canal au sens de l'invention.

Un pneumatique selon l'invention peut en outre comprendre l'une ou plusieurs des caractéristiques suivantes.
- Les cavités de la paire sont sensiblement alignées axialement l'une avec l'autre.
- En deçà du seuil d'usure prédéterminé, notamment lorsque le pneumatique est neuf, le pneumatique ne comprend aucune paire de cavités sonores ni aucun canal sonore associé. Ainsi, le chuintement caractéristique du passage des cavités sonores et du canal sonore associé dans l'aire de contact n'apparaît que lorsque l'usure du pneumatique dépasse le seuil prédéterminé. Ainsi, au cours de la vie normale d'utilisation du pneumatique, aucun signal sonore ne se laisse entendre. Les premiers chuintements n'apparaissent que lorsque l'usure du pneumatique est telle qu'au moins une paire de cavités sonores et le canal associé apparaissent sur la bande de roulement du pneumatique.

- La paire de cavités sonores et le canal sonore associé comprennent une embouchure définie par un contour ménagé sur la bande de roulement, le contour étant sensiblement plan de sorte que la paire de cavités et le canal associé sont aptes à être fermés de manière sensiblement étanche par un sol plan. En d'autres termes, la paire de cavités et le canal associé sont aptes à être fermés de manière simple par le sol puisqu'ils ne comprennent pas de canaux débouchant sur différentes surfaces de la bande de roulement, par exemple à l'intérieur de sculptures ménagées dans la bande de roulement.
- Chaque premier et deuxième sillon présentant une profondeur prédéterminée lorsque le pneumatique est neuf, la bande de roulement comprend au moins deux nervures ménagées transversalement au fond de chaque premier et deuxième sillon, de hauteur prédéterminée lorsque le pneumatique est neuf, sensiblement égale à la différence entre la profondeur prédéterminée de chaque premier et deuxième sillon et le seuil d'usure prédéterminé, le pneumatique étant tel que la distance séparant les deux nervures est inférieure à une distance prédéterminée pour que, au-delà du seuil d'usure radiale prédéterminé, chaque cavité formée par chaque sillon et délimitée par les deux nervures soit sonore. Dans l'état de la technique, les témoins d'usure visuels sont également formés par des nervures ménagées au fond de sillons circonférentiels du pneumatique. Toutefois, ces témoins d'usure visuels sont généralement au nombre de six à huit de sorte que les nervures sont très éloignées les unes des autres. Ainsi, la distance séparant deux nervures voisines est bien supérieure à la longueur de l'aire de contact du pneumatique avec le sol et, à aucun moment, deux nervures voisines ne sont simultanément en contact avec le sol. Ainsi, dans l'état de la technique, le volume défini par le sillon et délimité par deux nervures voisines forme certes une cavité, mais cette cavité n'est pas sonore car elle n'est pas apte à être fermée de manière sensiblement étanche par le sol.
- La distance séparant les deux nervures est supérieure à 15 millimètres et inférieure à 50 millimètres. Cette distance étant bien inférieure à la longueur de l'aire de contact, on est assuré que les cavités délimitées par ces deux nervures et le canal associé sont aptes à être fermées de manière étanche par le sol.
- Au-delà du seuil d'usure radiale prédéterminé, le volume total de la ou des paires de cavités sonores et du ou des canaux sonores associés est supérieur ou égal à 4 cm³, de préférence 5 cm³. Un tel volume de cavité est nécessaire pour que, lors de son passage dans l'aire de contact, l'intensité du chuintement soit suffisante pour être distinguée malgré le bruit de roulement du pneumatique sur le sol et les bruits du moteur et de la chaîne cinématique qui y est associée. En outre, cette valeur est suffisamment faible pour permettre de ménager des cavités dans un pneumatique classique sans détériorer ses performances de façon importante.
- Lorsque le pneumatique est neuf, les cavités sont fermées et noyées dans la masse de la bande de roulement et, au-delà du seuil d'usure radiale prédéterminé, le canal relie les cavités de la paire de sorte que les cavités et le canal associé soient sonores. Ces cavités sont par conséquent invisibles sur un pneumatique neuf mais apparaissent à mesure de l'usure du pneumatique.
- Lorsque le pneumatique est neuf, le canal est fermé et noyé dans la masse de la bande de roulement et, au-delà du seuil d'usure radiale prédéterminé, le canal relie les cavités de la paire de sorte que les cavités et le canal associé soient sonores.
- La bande de roulement est conformée de sorte que, au-delà du seuil d'usure radiale prédéterminé, elle comprend une pluralité de paires de cavités sonores et de canaux sonores associés de formes identiques, chaque cavité sonore de chaque paire étant reliée à l'autre cavité sonore de la paire par un canal associé ménagé dans la bande de roulement.
- Au-delà du seuil d'usure radiale prédéterminé, les paires de cavités sonores et les canaux sonores associés sont régulièrement répartis le long de la circonférence du pneumatique. L'équi-répartition circonférentielle des paires de cavités et des canaux associés permet d'obtenir une équi-répartition temporelle du bruit émis par chaque paire de cavités lorsque le pneumatique roule à une vitesse constante. Dans le cas où le pneumatique ne comporte qu'une seule paire de cavités et un canal associé, celle-ci permet également une équi-répartition temporelle du bruit émis lorsque le pneumatique roule à une vitesse constante. Le bruit émis par de telles cavités et canaux équi-répartis est unique et peut donc être identifié et analysé grâce à un procédé adapté de détection.
- Au-delà du seuil d'usure, le pneumatique comprend deux paires de cavités et deux canaux associés, voire quatre paires de cavités et quatre canaux associés. Pour des raisons de fabrication du pneumatique et de compatibilité avec les sculptures de la bande de roulement, il est avantageux de réduire le nombre de paire de cavités et de canaux associés autant que possible sans détériorer la possibilité de détecter l'usure du pneumatique.

L'invention sera mieux comprise à la lecture de la description qui va suivre, donnée uniquement à titre d'exemple et faite en se référant aux dessins dans lesquels :
- la figure 1 est un schéma de la bande de roulement d'un pneumatique neuf selon un premier mode de réalisation,
- la figure 2 est un schéma de la bande de roulement du pneumatique représenté sur la figure 1, dans un état usé,
- la figure 3 est un schéma selon une coupe radiale de la bande de roulement du pneumatique représenté sur la figure 2,
- la figure 4 comprend trois graphiques représentant le spectre fréquentiel du son produit au cours du roulage d'un véhicule équipé sur son essieu avant de deux pneumatiques similaires à celui de la figure 2 sur un sol lisse à trois vitesses différentes,
- les figures 5 et 6 sont des figures analogues aux figures 1 et 2 d'un pneumatique selon un deuxième mode de réalisation.

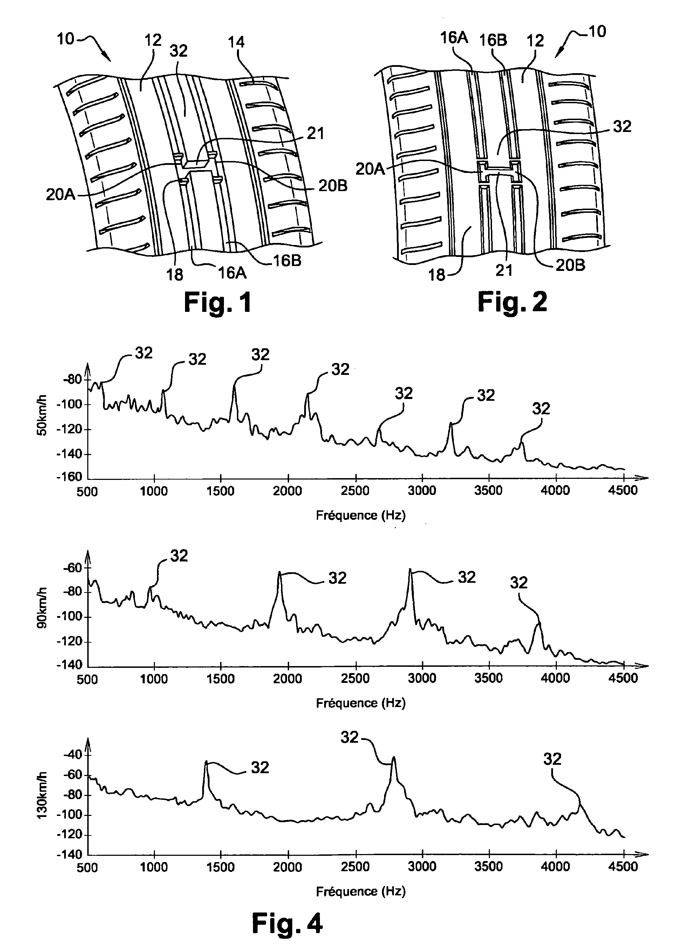

On a représenté sur la figure 1 une partie d'un pneumatique selon un premier mode de réalisation de l'invention, désigné par la référence générale 10.

Le pneumatique 10 comprend une bande de roulement 12 de forme sensiblement cylindrique, dont la surface externe est munie de sculptures 14. En particulier, la bande de roulement 12 comprend des premiers et deuxièmes sillons 16A, 16B circonférentiels et parallèles, creusés à la surface du pneumatique, de profondeur prédéterminée lorsque le pneumatique 10 est neuf. Par exemple, la profondeur de ces sillons est de l'ordre de 8 millimètres pour un véhicule de tourisme.

Transversalement aux sillons 16A, 16B, la bande de roulement 12 du pneumatique comprend un ensemble de nervures 18 ménagées au fond des sillons 16A, 16B, la hauteur des nervures 18 étant prédéterminée lorsque le pneumatique est neuf. Par exemple, la hauteur de ces nervures est de l'ordre de 3 millimètres. Sur l'exemple représenté sur la figure 1, les nervures 18 sont réparties régulièrement tout le long de la circonférence du pneumatique 10, la distance séparant deux nervures voisines étant de l'ordre de 20 à 30 millimètres.

La bande de roulement 12 comprend également une paire de première et deuxième cavités 20A, 20B respectivement agencées dans les premier et deuxième sillons 16A, 16B ainsi qu'un canal transversal 21 associé à la paire de cavités 20A, 20B. Le canal 21 est ménagé dans la bande 12 et relie les cavités 20A, 20B entre elles.

Les cavités 20A, 20B sont alignées axialement. En variante, elles sont décalées axialement l'une part rapport à l'autre.

Le volume défini par chaque sillon 16A, 16B et deux nervures voisines 18 forme respectivement chaque cavité 20A, 20B débouchant radialement vers l'extérieur du pneumatique 10. Le canal 21 débouche également vers l'extérieur du pneumatique 10.

Lorsque le pneumatique est neuf, comme cela est représenté sur la figure 1, la hauteur des nervures 18 est plus petite que la profondeur des sillons 16 de sorte que deux cavités 20A, 20B voisines comprennent un passage de communication fluidique situé au-dessus des nervures 18, c'est-à-dire au sommet des nervures 18. Ainsi, même lorsque la bande de roulement est en contact avec un sol 11 plan et lisse, le sol 11 n'obture pas complètement les cavités 20A, 20B car le sommet des nervures n'est pas en contact avec le sol 11. Dans ce cas, les différentes cavités 20A, 20B voisines sont en communication fluidique les unes avec les autres par un canal d'étranglement délimité par le sommet des nervures et le sol 11 recouvrant les cavités ou bien par le canal 21.

On a représenté sur la figure 2 le pneumatique 10 de la figure 1 dans un état usé. En d'autres termes, il s'agit d'un pneumatique ayant roulé de nombreux kilomètres et dont la bande de roulement 12 a été progressivement usée jusqu'à perdre quelques millimètres, de l'ordre de 5 mm.

En l'espèce, l'usure de la bande de roulement 12 du pneumatique 10 représentée sur la figure 2 est de l'ordre de 6 millimètres, c'est-à-dire supérieure à la distance séparant, lorsque le pneumatique est neuf, le sommet des nervures 18 de la surface de la bande de roulement. Compte tenu de cette usure prononcée, le sommet des nervures 18 est au même niveau que la surface de la bande de roulement 12. Ainsi, l'embouchure de chaque cavité 20A, 20B et du canal 21 est définie par un contour sensiblement plan ménagé sur la bande de roulement. Chaque paire de cavités 20A, 20B et le canal 21 qui y est associé sont distincts et séparés les uns des autres.

Chaque cavité 20A, 20B présente une longueur de l'ordre de 20 à 30 millimètres correspondant à l'écart circonférentiel entre deux nervures 18 adjacentes et une profondeur de l'ordre de 2 millimètres, inférieure ou égale à la hauteur initiale de la nervure 18. Le pneumatique 10 comporte deux paires de cavités sonores 20A, 20B et deux canaux transversaux 21 associés diamétralement opposés de sorte que les paires de cavités 20A, 20B et les canaux associés 21 sont régulièrement répartis le long de la circonférence du pneumatique 10. Les paires de cavités 20A, 20B et les canaux 21 sont de formes identiques.

Au-delà du seuil d'usure radiale prédéterminé, le volume total des paires de cavités sonores 20A, 20B et des canaux sonores associés 21 est supérieur ou égal à 4 cm³, de préférence 5 cm³.

Du fait que l'embouchure de chaque cavité 20A, 20B et du canal 21 est définie par un contour sensiblement plan, elle est apte à être obturée parfaitement et hermétiquement par un sol lisse et plan lors du roulage. En d'autres termes, lorsque le pneumatique 10 est usé, les cavités 20A, 20B et le canal 21 sont conformés de manière à être fermés par le sol de manière sensiblement étanche lors de leur passage dans l'aire de contact du pneumatique 10 avec le sol.

De telles cavités 20A, 20B et un tel canal 21 associé formés à la surface de la bande de roulement 10 d'un pneumatique qui, d'une part, débouchent radialement vers l'extérieur du pneumatique et, d'autre part, sont conformés pour être fermés hermétiquement lors de leur passage dans l'aire de contact, sont qualifiés de "sonores".

Différentes tailles de cavités ou différentes orientations de ces cavités 20A, 20B par rapport à la bande de roulement peuvent être envisagées.

Dans un pneumatique selon l'invention, de telles cavités sonores n'apparaissent que lorsque le pneumatique est usé au-delà d'un seuil d'usure radiale prédéterminée et sont inexistantes en deçà de ce seuil, notamment lorsque le pneumatique est neuf.

Une façon de faire apparaître des cavités sonores uniquement lorsque le pneumatique est usé au-delà d'un seuil prédéterminé a été décrite en référence aux figures 1 et 2. Une autre façon peut être de ménager sur le pneumatique une paire de cavités 20A, 20B qui, lorsque le pneumatique est neuf, sont fermées et noyées dans la masse de la bande de roulement et qui, au-delà d'un seuil d'usure radiale prédéterminé, sont sonores.

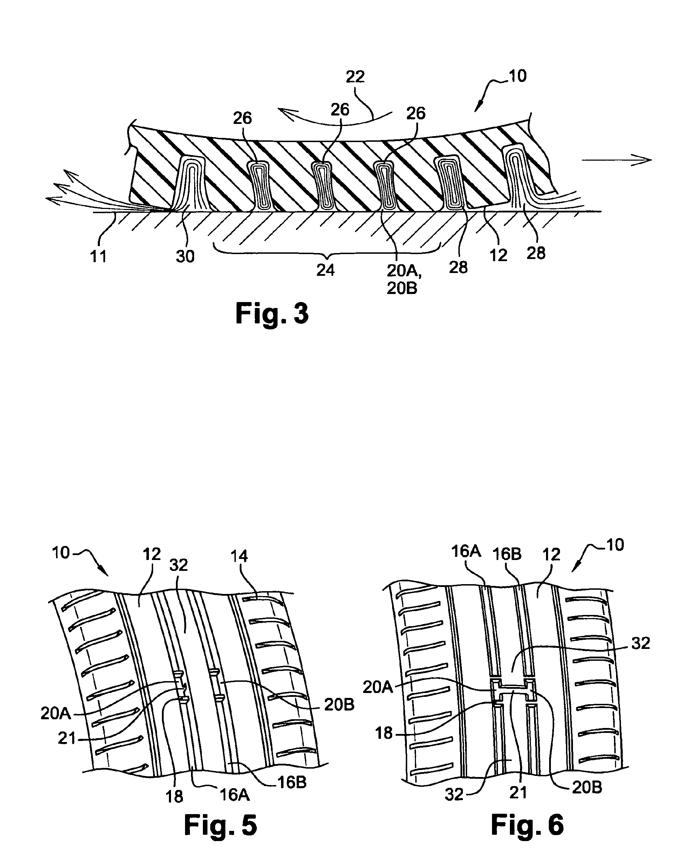

On a représenté sur la figure 3 une vue selon une coupe radiale d'un pneumatique similaire à celui de la figure 2 en roulage sur un sol. Les dimensions sont modifiées de façon arbitraire pour la clarté de l'exposé. Ce pneumatique 10 est dans un état usé et comprend par conséquent un ensemble de cavités sonores 20A, 20B et de canaux associés 21.

On a représenté par une flèche 22 le sens de rotation du pneumatique 10 lors de son roulage sur le sol. A un instant donné, une partie de la bande de roulement 12 du pneumatique 10 est en contact avec le sol. Cette partie en contact est appelée aire de contact 24. Les cavités 20A, 20B de chaque paire sont positionnés axialement dans une partie centrale 32 de l'aire de contact 24 du pneumatique formée par une partie d'une bande de roulement circonférentielle du pneumatique 10.

Dans l'exemple représenté sur la figure 3, l'aire de contact 24 comprend trois paires de cavités sonores 26 et trois canaux sonores associés dont l'embouchure radialement extérieure est recouverte par le sol 11. Ainsi, ces trois paires de cavités sonores 26 et leurs canaux sonores associés sont hermétiquement fermés.

L'aire de contact 12 du pneumatique comprend également des paires de cavités sonores 28 et leurs canaux sonores associés, situés en amont des paires de cavités fermées 26 et leurs canaux associés, qui sont ouverts car leur embouchure n'est pas dans l'aire de contact et n'est pas conséquent pas recouverte par le sol. Lors du roulage du pneumatique dans le sens désigné par la flèche 22, les paires de cavités ouvertes 28 et leurs canaux associés vont progresser vers l'aire de contact 24 jusqu'à ce que leur embouchure soit obturée par le sol 11.

Enfin, la bande de roulement 12 du pneumatique 10 comprend également des paires de cavités 30 et leurs canaux associés situés en aval des paires de cavités 26 et des canaux associés fermés, par rapport au sens de rotation du pneumatique. Dans l'exemple représenté sur la figure 4, la paire de cavité 30 et le canal associé aval représentés sont ouverts car le sol 11 n'est pas en contact avec leur embouchure. A un instant précédent, cette paire de cavités 30 et le canal associé étaient fermés car localisés dans la zone de l'aire de contact 24 du pneumatique avec le sol 11.

Ainsi, au cours du roulage du pneumatique, une paire de cavités sonores 20 et le canal associé sonore donnés occupe successivement une position amont 28 dans laquelle ils sont ouverts, puis une position 26 localisée dans l'aire de contact 24 dans laquelle ils sont fermés car recouverts par le sol, puis enfin une position ouverte 30 de nouveau dans laquelle ils ne sont plus recouverts par le sol.

En d'autres termes, la rotation du pneumatique provoque, pour une paire de cavités et un canal associé donnés, l'admission d'air à l'intérieur de la paire de cavités et du canal associé, la compression de l'air contenu dans la paire de cavités et du canal associé lorsque ceux-ci sont fermés par le sol dans l'aire de contact 24, puis la détente de l'air contenu dans la paire de cavités et le canal associé lors de l'ouverture de ceux-ci par séparation de la bande de roulement d'avec le sol.

Cette succession d'étapes d'admission/compression/détente est à l'origine d'un bruit caractéristique, parfois appelé chuintement ou bruit de pompage résultant de la détente de l'air comprimé contenu dans la paire de cavités et le canal associé. L'amplitude et la signature fréquentielle de ce bruit dépendent notamment de la forme, du volume et du nombre de paire de cavités sonores et de canaux sonores associés utilisés. De préférence, les paires de cavités et de canaux associés sont conformés de sorte que ce bruit soit détectable par un utilisateur du véhicule automobile ou par un dispositif électronique.

La signature fréquentielle du bruit de chuintement des paires de cavités et des canaux associés dépend également de la vitesse de rotation du pneumatique comme représenté sur la figure 4.

Des mesures réelles sur piste lisse ont été réalisées avec un véhicule BMW 318d équipé à l'avant de deux pneumatiques test similaires à celui de la figure 2 et à l'arrière de deux pneumatiques standards MICHELIN Primacy HP. La dimension des quatre pneumatiques est 205/55R16. Un enregistrement du bruit dans l'habitacle du véhicule a été effectué. Les pneumatiques tests comportent deux rangées de 75 cavités sonores.

La figure 4 comprend trois graphiques représentant le spectre fréquentiel du signal produit à 50 kilomètres/heure, 90 kilomètres/heure et 130 kilomètres/heure. L'échelle des ordonnées est arbitraire.

On constate sur ces trois spectres fréquentiels que, pour une vitesse du pneumatique donnée, on distingue l'apparition d'une pluralité de pics 32 caractéristiques du bruit de chuintement des paires de cavités sonores et de canaux associés sonores ménagés à la surface du pneumatique.

La position fréquentielle et les écarts entre les pics sont notamment fonction de la vitesse du véhicule.

De plus, le rapport signal/bruit de ces pics varie en fonction du type de route sur laquelle le pneumatique roule. En effet, plus la route est rugueuse, plus le bruit de roulage est important et plus le rapport signal/bruit est faible. Par ailleurs, on constate que, lorsque la route est rugueuse, la fermeture des paires de cavités et des canaux associés compris dans l'aire de contact 24 du pneumatique avec le sol est moins hermétique de sorte que l'intensité sonore du chuintement est plus faible.

Par conséquent, dans des circonstances normales de roulage, il est facile de détecter les pics de fréquences dus à la présence des paires de cavités sonores et des canaux sonores associés sur la bande de roulement du pneumatique par un traitement numérique approprié.

Ainsi, en contrôlant de manière régulière le bruit de roulage des pneumatiques, on peut détecter l'apparition de ces pics de fréquence, ce qui signifie qu'une ou plusieurs paires de cavités sonores et des canaux sonores associés sont apparus à la surface du pneumatique. Or, la présence de paires de cavités sonores et de canaux sonores associés à la surface du pneumatique témoigne de l'usure de la bande de roulement de ce dernier. Le pneumatique selon l'invention est donc muni de témoins d'usure sonores.

On a représenté sur les figures 5 et 6 un pneumatique selon un deuxième mode de réalisation de l'invention. Les éléments analogues à ceux du premier mode de réalisation représentés sur les figures précédentes sont désignés par des références identiques.

A la différence du premier mode de réalisation, lorsque le pneumatique est neuf, le canal 21 est fermé et noyé dans la masse de la bande de roulement 12 et, au-delà du seuil d'usure radiale prédéterminé, le canal 21 relie les cavités 20A, 20B de la paire de sorte que les cavités 20A, 20B et le canal 21 associé soient sonores. En l'espèce, le canal 21 est noyé dans une partie d'une bande circonférentielle 32 de gomme intercalée entre les sillons 16A, 16B formant une partie centrée axialement de l'aire de contact 24.

## Revendications

1. Pneumatique (10) de véhicule, comprenant une bande de roulement (12) conformée de sorte que, au-delà d'un seuil d'usure radiale prédéterminé, elle comprend au moins une paire de première et deuxième cavités (20A, 20B) dites « sonores », chaque première et deuxième cavité sonore (20A, 20B) étant respectivement agencée dans un premier et deuxième sillon circonférentiel (16A, 16B) de la bande de roulement (12), **caractérisé en ce que** chaque cavité sonore (20A, 20B) de la paire est reliée à l'autre cavité sonore (20A, 20B) de la paire par un canal (21) dit « sonore », ménagé dans la bande de roulement (12), chaque cavité (20A, 20B) de la paire et le canal associé (21) :
- débouchant radialement vers l'extérieur du pneumatique (10),
- étant conformés de manière à être fermés par le sol (11) de manière sensiblement étanche lors de leur passage dans l'aire du contact (24) du pneumatique (10) avec le sol (11).

2. Pneumatique (10) selon la revendication précédente, dans lequel les cavités (20A, 20B) de la paire sont sensiblement alignées axialement l'une avec l'autre.

3. Pneumatique (10) selon l'une quelconque des revendications précédentes, dans lequel les cavités (20A, 20B) de la paire sont disposées axialement dans une partie centrale de l'aire de contact (24).

4. Pneumatique (10) selon l'une quelconque des revendications précédentes, qui, en deçà du seuil d'usure prédéterminé, notamment lorsque le pneumatique (10) est neuf, ne comprend aucune paire de cavités sonores (20A, 20B) ni aucun canal sonore associé (21).

5. Pneumatique (10) selon l'une quelconque des revendications précédentes, dans lequel la paire de cavités sonores (20A, 20B) et le canal sonore associé (21) comprennent une embouchure définie par un contour ménagé sur la bande de roulement (12), le contour étant sensiblement plan de sorte que la paire de cavités (20A, 20B) et le canal associé (21) sont aptes à être fermés de manière sensiblement étanche par un sol plan (11).

6. Pneumatique (10) selon l'une quelconque des revendications précédentes, dans lequel, chaque premier et deuxième sillon (16A, 16B) présentant une profondeur prédéterminée lorsque le pneumatique (10) est neuf, la bande de roulement (12) comprend au moins deux nervures (18) ménagées transversalement au fond de chaque premier et deuxième sillon (16A, 16B), de hauteur prédéterminée lorsque le pneumatique (10) est neuf, sensiblement égale à la différence entre la profondeur prédéterminée de chaque premier et deuxième sillon (16A, 16B) et le seuil d'usure prédéterminé,
dans lequel la distance séparant les deux nervures (18) est inférieure à une distance prédéterminée pour que, au-delà du seuil d'usure radiale prédéterminé, chaque cavité (20A, 20B) formée par chaque premier et deuxième sillon (16A, 16B) et délimitée par les deux nervures (18) soit sonore.

7. Pneumatique (10) selon la revendication précédente, dans lequel la distance séparant les deux nervures (18) est supérieure à 15 millimètres et inférieure à 50 millimètres.

8. Pneumatique (10) selon l'une quelconque des revendications précédentes, dans lequel, au-delà du seuil d'usure radiale prédéterminé, le volume total de la ou des paires de cavités sonores (20A, 20B) et du ou des canaux sonores associés (21) est supérieur ou égal à 4 cm³, de préférence 5 cm³.

9. Pneumatique (10) selon l'une quelconque des revendications précédentes, dans lequel, lorsque le pneumatique (10) est neuf, les cavités (20A, 20B) sont fermées et noyées dans la masse de la bande de roulement (12) et, au-delà du seuil d'usure radiale prédéterminé le canal (21) relie les cavités (20A, 20B) de la paire de sorte que les cavités (20A, 20B) et le canal associé (21) soient sonores.

10. Pneumatique (10) selon l'une quelconque des revendications précédentes, dans lequel, lorsque le pneumatique (10) est neuf, le canal (21) est fermé et noyé dans la masse (32) de la bande de roulement (12) et, au-delà du seuil d'usure radiale prédéterminé, le canal (21) relie les cavités (20A, 20B) de la paire de sorte que les cavités (20A, 20B) et le canal associé (21) soient sonores.

11. Pneumatique (10) selon l'une quelconque des revendications précédentes, dont la bande de roulement (12) est conformée de sorte que, au-delà du seuil d'usure radiale prédéterminé, elle comprend une pluralité de paires de cavités sonores (20) et de canaux sonores associés (21) de formes identiques, chaque cavité sonore (20A, 20B) de chaque paire étant reliée à l'autre cavité sonore (20A, 20B) de la paire par un canal associé (21) ménagé dans la bande de roulement (12).

12. Pneumatique (10) selon la revendication précédente, dans lequel, au-delà du seuil d'usure radiale prédéterminé, les paires de cavités (20) sonores et les canaux sonores associés sont régulièrement répartis le long de la circonférence du pneumatique (10).

13. Pneumatique (10) selon l'une quelconque des revendications précédentes, comprenant, au-delà du seuil d'usure, deux paires de cavités (20A, 20B) et deux canaux associés (21), voire quatre paires de cavités (20A, 20B) et quatre canaux associés (21).

## Claims

1. Vehicle tyre (10), comprising a tread strip (12) configured in such a way that, beyond a predetermined radial wear threshold, it comprises at least one pair of first and second cavities (20A, 20B) known as "sounding cavities", each first and second sounding cavity (20A, 20B) being arranged respectively in a first and second circumferential groove (16A, 16B) of the tread strip (12), **characterized in that** each sounding cavity (20A, 20B) of the pair is connected to the other sounding cavity (20A, 20B) of the pair by a channel (21) known as a "sounding channel" formed in the tread strip (12), each cavity (20A, 20B) of the pair and the associated channel (21):
- opening radially to the outside of the tyre (10),
- being configured so that they are closed by the ground (11) in a substantially airtight manner as they pass through the contact patch (24) where the tyre (10) makes contact with the ground (11).

2. Tyre (10) according to the preceding claim, in which the cavities (20A, 20B) of the pair are substantially axially aligned with one another.

3. Tyre (10) according to either one of the preceding claims, in which the cavities (20A, 20B) of the pair are arranged axially in a central part of the contact patch (24).

4. Tyre (10) according to any one of the preceding claims, and which, before a predetermined wear threshold is reached, notably when the tyre (10) is new, comprises no pair of sounding cavities (20A, 20B) and no associated sounding channel (21).

5. Tyre (10) according to any one of the preceding claims, in which the pair of sounding cavities (20A, 20B) and the associated sounding channel (21) comprise a mouth defined by a contour formed on the tread strip (12), the contour being substantially planar so that the pair of cavities (20A, 20B) and the associated channel (21) can be closed in a substantially airtight manner by flat ground (11).

6. Tyre (10) according to any one of the preceding claims, in which, with each first and second groove (16A, 16B) having a predetermined depth when the tyre (10) is new, the tread strip (12) comprises at least two ribs (18) formed transversally in the bottom of each first and second groove (16A, 16B), these being of a predetermined height when the tyre (10) is new, this height being substantially equal to the difference between the predetermined depth of each first and second groove (16A, 16B) and the predetermined wear threshold,
in which the distance separating the two ribs (18) is smaller than a distance which has been predetermined so that, beyond the predetermined radial wear threshold, each cavity (20A, 20B) formed by each first and second groove (16A, 16B) and delimited by the two ribs (18), is a sounding cavity.

7. Tyre (10) according to the preceding claim, in which the distance separating the two ribs (18) is greater than 15 millimetres and less than 50 millimetres.

8. Tyre (10) according to any one of the preceding claims, in which, beyond the predetermined radial wear threshold, the total volume of the pair or pairs of sounding cavities (20A, 20B) and of the associated sounding channel or channels (21) is greater than or equal to 4 cm³, preferably 5 cm³.

9. Tyre (10) according to any one of the preceding claims, in which, when the tyre (10) is new, the cavities (20A, 20B) are closed and embedded within the mass of the tread strip (12) and, beyond the predetermined radial wear threshold, the channel (21) connects the cavities (20A, 20B) of the pair so that the cavities (20A, 20B) and the associated channel (21) become sounding cavities and channel.

10. Tyre (10) according to any one of the preceding claims, in which, when the tyre (10) is new, the channel (21) is closed and embedded within the mass (32) of the tread strip (12) and, beyond the predetermined radial wear threshold, the channel (21) connects the cavities (20A, 20B) of the pair so that the cavities (20A, 20B) and the associated channel (21) become sounding cavities and channel.

11. Tyre (10) according to any one of the preceding claims, in which the tread strip (12) is configured in such a way that, beyond the predetermined radial wear threshold, it comprises a plurality of pairs of sounding cavities (20) and of associated sounding channels (21) of identical shapes, each sounding cavity (20A, 20B) of each pair being connected to the other sounding cavity (20A, 20B) of the pair by an associated channel (21) formed in the tread strip (12).

12. Tyre (10) according to the preceding claim, in which, beyond the predetermined radial wear threshold, the pairs of sounding cavities (20) and the associated sounding channels are evenly distributed along the circumference of the tyre (10).

13. Tyre (10) according to any one of the preceding claims and comprising, beyond the wear threshold, two pairs of cavities (20A, 20B) and two associated channels (21), or even four pairs of cavities (20A, 20B) and four associated channels (21).

## Patentansprüche

1. Fahrzeug-Luftreifen (10), der einen Laufstreifen (12) enthält, der so gestaltet ist, dass er jenseits einer vorbestimmten radialen Verschleißschwelle mindestens ein Paar erster und zweiter so genannter "akustischer" Hohlräume (20A, 20B) enthält, wobei jeder erste und zweite akustische Hohlraum (20A, 20B) jeweils in einer ersten und zweiten Umfangsrille (16A, 16B) des Laufstreifens (12) ausgebildet ist, **dadurch gekennzeichnet, dass** jeder akustische Hohlraum (20A, 20B) des Paars mit dem anderen akustischen Hohlraum (20A, 20B) des Paars über einen so genannten "akustischen" Kanal (21) verbunden ist, der im Laufstreifen (12) vorgesehen ist, wobei jeder Hohlraum (20A, 20B) des Paars und der zugeordnete Kanal (21):
- radial zur Außenseite des Luftreifens (10) münden,
- so gestaltet sind, dass sie bei ihrem Durchgang durch den Kontaktbereich (24) des Luftreifens (10) mit dem Boden (11) vom Boden (11) im Wesentlichen dicht geschlossen werden.

2. Luftreifen (10) nach dem vorhergehenden Anspruch, bei dem die Hohlräume (20A, 20B) des Paars im Wesentlichen axial zueinander fluchtend ausgerichtet sind.

3. Luftreifen (10) nach einem der vorhergehenden Ansprüche, bei dem die Hohlräume (20A, 20B) des Paars axial in einem zentralen Teil des Kontaktbereichs (24) angeordnet sind.

4. Luftreifen (10) nach einem der vorhergehenden Ansprüche, der unterhalb der vorbestimmten Verschleißschwelle, insbesondere wenn der Luftreifen (10) neu ist, kein Paar von akustischen Hohlräumen (20A, 20B) und keinen zugeordneten akustischen Kanal (21) enthält.

5. Luftreifen (10) nach einem der vorhergehenden Ansprüche, bei dem das Paar von akustischen Hohlräumen (20A, 20B) und der zugeordnete akustische Kanal (21) eine Mündung enthalten, die von einem auf dem Laufstreifen (12) vorgesehenen Umriss definiert wird, wobei der Umriss im Wesentlichen eben ist, so dass das Paar von Hohlräumen (20A, 20B) und der zugeordnete Kanal (21) von einem ebenen Boden (11) im Wesentlichen dicht geschlossen werden können.

6. Luftreifen (10) nach einem der vorhergehenden Ansprüche, bei dem, wenn jede erste und zweite Rille (16A, 16B) eine vorbestimmte Tiefe aufweist, wenn der Luftreifen (10) neu ist, der Laufstreifen (12) mindestens zwei Rippen (18) aufweist, die quer zum Boden jeder ersten und zweiten Rille (16A, 16B) vorgesehen sind, mit einer vorbestimmten Höhe, wenn der Luftreifen (10) neu ist, die im Wesentlichen gleich der Differenz zwischen der vorbestimmten Tiefe jeder ersten und zweiten Rille (16A, 16B) und der vorbestimmten Verschleißschwelle ist,
bei dem der die zwei Rippen (18) trennende Abstand geringer ist als ein vorbestimmter Abstand, damit jenseits der vorbestimmten radialen Verschleißschwelle jeder von jeder ersten und zweiten Rille (16A, 16B) geformte und von den zwei Rippen (18) begrenzte Hohlraum (20A, 20B) akustisch ist.

7. Luftreifen (10) nach dem vorhergehenden Anspruch, bei dem der die zwei Rippen (18) trennende Abstand größer als 15 Millimeter und kleiner als 50 Millimeter ist.

8. Luftreifen (10) nach einem der vorhergehenden Ansprüche, bei dem jenseits der vorbestimmten radialen Verschleißschwelle das Gesamtvolumen des Paars oder der Paare von akustischen Hohlräumen (20A, 20B) und des zugeordneten Kanals oder der zugeordneten Kanäle (21) größer als oder gleich 4 cm³, vorzugsweise 5 cm³ ist.

9. Luftreifen (10) nach einem der vorhergehenden Ansprüche, bei dem, wenn der Luftreifen (10) neu ist, die Hohlräume (20A, 20B) geschlossen und in die Masse des Laufstreifens (12) versenkt sind, und jenseits der vorbestimmten radialen Verschleißschwelle der Kanal (21) die Hohlräume (20A, 20B) des Paars verbindet, so dass die Hohlräume (20A, 20B) und der zugeordnete Kanal (21) akustisch sind.

10. Luftreifen (10) nach einem der vorhergehenden Ansprüche, bei dem, wenn der Luftreifen (10) neu ist, der Kanal (21) geschlossen und in die Masse (32) des Laufstreifens (12) versenkt ist, und jenseits der vorbestimmten radialen Verschleißschwelle der Kanal (21) die Hohlräume (20A, 20B) des Paars verbindet, so dass die Hohlräume (20A, 20B) und der zugeordnete Kanal (21) akustisch sind.

11. Luftreifen (10) nach einem der vorhergehenden Ansprüche, dessen Laufstreifen (12) so gestaltet ist, dass er jenseits der vorbestimmten radialen Verschleißschwelle eine Vielzahl von Paaren von akustischen Hohlräumen (20) und zugeordneten Kanälen (21) gleicher Formen enthält, wobei jeder akustische Hohlraum (20A, 20B) jedes Paars mit dem anderen akustischen Hohlraum (20A, 20B) des Paars durch einen zugeordneten Kanal (21) verbunden ist, der im Laufstreifen (12) vorgesehen ist.

12. Luftreifen (10) nach dem vorhergehenden Anspruch, bei dem jenseits der vorbestimmten radialen Verschleißschwelle die Paare von akustischen Hohlräumen (20) und die zugeordneten akustischen Kanäle gleichmäßig entlang des Umfangs des Luftreifens (10) verteilt sind.

13. Luftreifen (10) nach einem der vorhergehenden Ansprüche, der jenseits der Verschleißschwelle zwei Paare von Hohlräumen (20A, 20B) und zwei zugeordnete Kanäle (21), sogar vier Paare von Hohlräumen (20A, 20B) und vier zugeordnete Kanäle (21) enthält.
